# EUROPÄISCHE PATENTANMELDUNG

(11) **EP 0 951 164 A1**
(43) Veröffentlichungstag der Anmeldung: **20.10.1999**
(21) Anmeldenummer: 99107128.3
(22) Anmeldetag: 13.04.1999
(51) Int. Cl.: H04M 1/66

(54) **Verfahren zur akustischen und/oder optischen Signalisierung eingehender Rufe bei einem Telekommunikationsendgerät**

(30) Priorität: 17.04.1998 DE 19817041
(71) Anmelder: ROBERT BOSCH GMBH, 70442 Stuttgart (DE)
(72) Erfinder: Wiedorn, Klaus, 61209 Echzell (DE)

(57) **Zusammenfassung**

Es wird ein Verfahren zur akustischen und/oder optischen Signalisierung eingehender Rufe bei einem Telekommunikationsendgerät (1) vorgeschlagen, wobei eine Rufnummerninformation (20) eines rufenden Teilnehmers an das Telekommunikationsendgerät (1) übertragen wird. Die vom rufenden Teilnehmer empfangene Rufnummerninformation (20) wird mit mindestens einem Rufnummerneintrag (11, ..., 16) verglichen, der in einem dem Telekommunikationsendgerät (1) zugeordneten Speicher (5) abgelegt ist. Bei Übereinstimmung der Rufnummerninformation (20) mit dem Rufnummerneintrag (11, ..., 16) wird zumindest eine akustische Signalisierung des eingehenden Rufes unterdrückt.

## Beschreibung

### Stand der Technik

Die Erfindung geht von einem Verfahren nach der Gattung des Hauptanspruchs aus.

Aus dem Katalog "Bosch Mobiltelefone 1996/97. Erfrischende Ideen für unterhaltsame Verbindungen." ist bereits das Mobiltelefon "M-Com 906" bekannt, das als Hauptleistungsmerkmal eine Rufnummeridentifikation vorsieht. Dabei wird ermöglicht, daß vor Gesprächsannahme die Rufnummer des jeweiligen Teilnehmers am Display des Mobiltelefons angezeigt wird.

### Vorteile der Erfindung

Das erfindungsgemäße Verfahren mit den Merkmalen des Hauptanspruchs hat demgegenüber den Vorteil, daß vom rufenden Teilnehmer empfangene Rufnummerninformation mit mindestens einem Rufnummerneintrag verglichen wird, der in einem dem Telekommunikationsendgerät zugeordneten Speicher abgelegt ist, und daß bei Übereinstimmung der Rufnummerninformation mit dem Rufnummerneintrag zumindest eine akustische Signalisierung des eingehenden Rufes unterdruckt wird. Auf diese Weise kann eine Störung durch unerwünschte Anrufe unterdruckt werden, wohingegen sonstige Anrufe weiterhin zu einer akustischen Signalisierung des Telekommunikationsendgerätes führen.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist es, daß bei Übereinstimmung der Rufnummerninformation mit dem Rufnummerneintrag eine optische Signalisierung des eingehenden Rufes unterdrückt wird. Auf diese Weise kann nicht nur eine akustische, sondern auch eine optische Störung durch unerwünschte Anrufe unterdrückt werden.

Ein weiterer Vorteil besteht darin, daß mindestens ein in einer dem Telekommunikationsendgerät zugeordneten Eingabeeinheit eingegebener Rufnummerneintrag im Speicher gespeichert wird. Auf diese Weise kann der Benutzer entsprechend seinen Bedürfnissen selbst die Rufnummerneinträge an der Eingabeeinheit eingeben, von deren jeweils zugeordnetem Telekommunikationsendgerät er keine Anrufe wünscht.

Besonders vorteilhaft ist es, daß die Rufnummerninformation und/oder ihr zugeordnete Daten eines eingehenden und zumindest akustisch nicht signalisierten Rufes in einem weiteren Speicher, insbesondere in einer Anrufliste, gespeichert werden. Auf diese Weise kann der Benutzer trotz unterdrückter Signalisierung feststellen, ob ungewünschte Anrufe eingegangen sind.

### Zeichnung

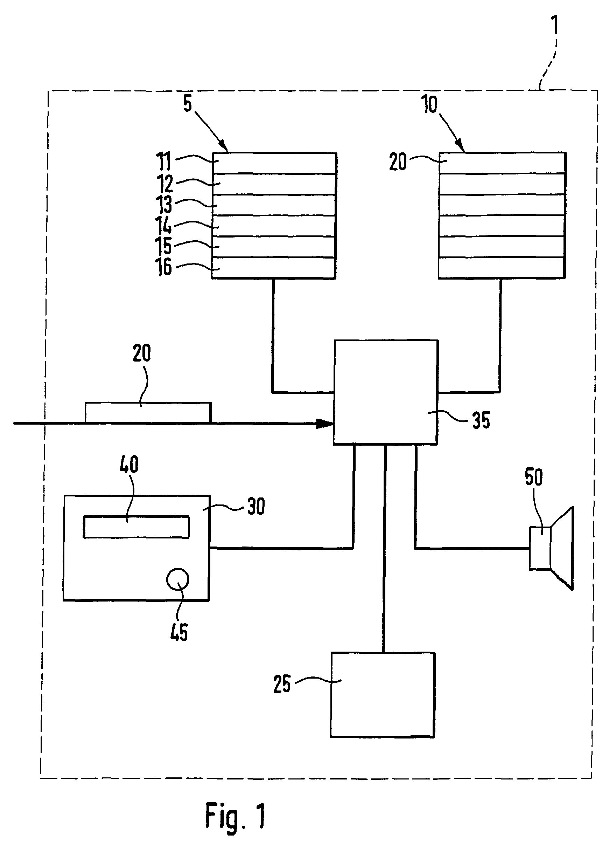

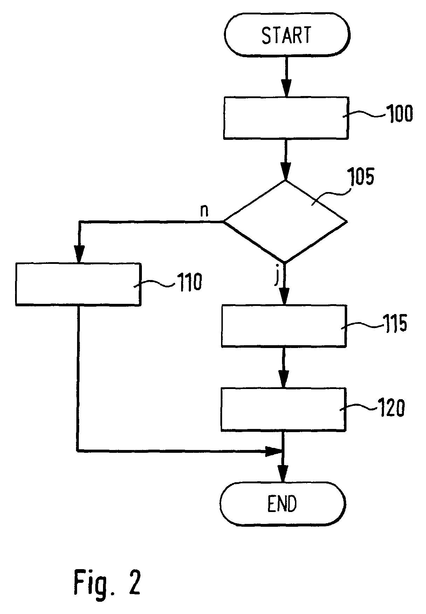

Ein Ausführungsbeispiel der Erfindung ist in der Zeichnung dargestellt und in der nachfolgenden Beschreibung näher erläutert. Es zeigen
Figur 1 ein Blockschaltbild eines Telekommunikationsendgerätes und Figur 2 einen Ablaufplan für eine Steuerung des Telekommunikationsendgerätes.

### Beschreibung des Ausführungsbeispieles

In Figur 1 ist ein Blockschaltbild eines Telekommunikationsendgerätes 1 mit den für das erfindungsgemäße Verfahren wesentlichen Baugruppen dargestellt. Weitere, für die Funktion des Telekommunikationsendgerätes 1 erforderliche, aber für die Durchführung des erfindungsgemäßen Verfahrens unwesentliche Baugruppen wurden der Übersichtlichkeit halber in Figur 1 nicht dargestellt. Bei dem Telekommunikationsendgerät 1 gemaß Figur 1 kann es sich um ein schnurgebundenes, ein schnurloses oder ein mobiles Telekommunikationsendgerät handeln. Das Telekommunikationsendgerät 1 gemäß Figur 1 umfaßt eine Steuerung 35, der aus einem Telekommunikationsnetz, beispielsweise einem ISDN-Netz (Integrated Services Data Network), bei einem eingehenden Ruf eine Rufnummerninformation 20 zugeführt ist. An die Steuerung 35 ist ein erster Speicher 5 und gegebenenfalls ein zweiter Speicher 10 angeschlossen. Der erste Speicher 5 umfaßt in dem beschriebenen Beispiel sechs Speicherplätze, in denen jeweils ein Rufnummerneintrag 11, ..., 16 abgelegt sein kann. Gemäß Figur 1 ist in jedem der sechs Speicherplätze des ersten Speichers 5 ein Rufnummerneintrag 11, ..., 16 abgelegt. Der zweite Speicher 10 umfaßt in diesem Ausführungsbeispiel gemaß Figur 1 ebenfalls sechs Speicherplätze, wobei in einem der sechs Speicherplätze des zweiten Speichers 10 die Rufnummerninformation 20 eingetragen ist. An die Steuerung 35 ist weiterhin eine Anzeigevorrichtung 30 mit einem Display 40 und einer Leuchtdiode 45 angeschlossen. Weiterhin ist die Steuerung 35 mit einer Eingabeeinheit 25 und mit einem Lautsprecher 50 verbunden.

Bei einem eingehenden Ruf wird über das Telekommunikationsnetz die Rufnummerninformation 20 beispielsweise in Form der Rufnummer des rufenden Teilnehmers an das Telekommunikationsendgerät 1 bzw. dessen Steuerung 35 übertragen. Die Steuerung 35 vergleicht daraufhin die Rufnummerninformation 20 nacheinander mit den Rufnummerneintragen 11, ..., 16 des ersten Speichers 5. Die Rufnummerneinträge 11, ..., 16 liegen dabei beispielsweise ebenfalls in Form jeweils einer Rufnummer vor. Stimmt die Rufnummerninformation 20 mit einem der Rufnummerneinträge 11, ..., 16 überein, so wird zumindest eine akustische Signalisierung des eingehenden Rufes mittels des Lautsprechers 50 unterdrückt. Weist, wie im beschriebenen Ausführungsbeispiel gemäß Figur 1, das Telekommunikationsendgerät 1 auch eine optische Signalisierung in Form der Leuchtdiode 45 und/oder der Anzeige der Rufnummerninformation 20 am Display 40 auf, so kann zusätzlich zur Unterdrückung der akustischen Signalisierung des eingehenden Rufes auch eine Unterdrückung der optischen Signalisierung des eingehenden Rufes erfolgen, wobei wahlweise eine Beleuchtung der Leuchtdiode 45 oder eine Anzeige der Rufnummerninformation 20 am Display 40 oder beides unterdrückt werden kann. Der Benutzer kann an der Eingabeeinheit 25 beispielsweise mittels einer alphanumerischen oder einer numerischen Tastatur selbst Rufnummerneintrage 11, ..., 16 eingeben, die dann im ersten Speicher 5 gespeichert werden. Dabei können die Rufnummerneintrage 11, ..., 16 in dem ersten Speicher 5 beispielsweise nach dem First-In-First-Out-Prinzip (FIFO) abgespeichert werden, so daß der am längsten im ersten Speicher 5 befindliche Rufnummerneintrag 11, ..., 16 als erstes überschrieben wird, wenn kein freier Speicherplatz im Speicher 5 mehr vorhanden ist. Der zweite Speicher 10 kann als Anrufliste ausgebildet sein, in dem die Rufnummern eingegangener und nicht entgegengenommener Rufe gespeichert werden. Für den Fall, daß die Rufnummerninformation 20 mit einem der Rufnummerneinträge 11, ..., 16 des ersten Speichers 5 übereinstimmt und somit zumindest die akustische Signalisierung mittels des Lautsprechers 50 unterbleibt, kann die Rufnummerninformation 20 optional in einem Speicherplatz des zweiten Speichers 10 abgelegt werden, wenn der Ruf nicht entgegengenommen wurde. Zusätzlich oder alternativ zu einer solchen Rufnummerninformation 20 können dieser zugeordnete Daten, beispielsweise der Name des zugehörigen Teilnehmers, im selben Speicherplatz des zweiten Speichers 10 abgelegt werden, sofern er in einem in Figur 1 nicht dargestellten weiteren Speicherbereich des Telekommunikationsendgerätes 1 in Zuordnung zu dieser Rufnummerninformation abgespeichert ist. Auf den weiteren Speicherbereich kann dabei verzichtet werden, wenn diese zusätzlichen Daten in Zuordnung zu den Rufnummerneintragen 11, ..., 16 und zusammen mit diesen im ersten Speicher 5 abgespeichert sind. Die zusätzlichen Daten können dabei ebenfalls vom Benutzer an der Eingabeeinheit 25 in Zuordnung zu dem jeweiligen Rufnummerneintrag 11, ..., 16 eingegeben werden. Dabei kann beispielsweise über die Eingabeeinheit 25 ein Speicherplatz des ersten Speichers 5 zur Anzeige am Display 40 aufgerufen werden, so daß auf diesem Speicherplatz durch weitere Eingabe an der Eingabeeinheit 25 zusätzliche Daten, beispielsweise mittels einer alphanumerischen Tastatur, eingegeben und abgespeichert werden können.

Gemäß dem Ausführungsbeispiel nach Figur 1 wurde von der Steuerung 35 eine Übereinstimmung der Rufnummerninformation 20 mit einem der Rufnummerneintrage 11, ..., 16 des ersten Speichers 5 festgestellt, so daß die Rufnummerninformation 20 gegebenenfalls mit zusätzlichen Daten, die dem entsprechenden Rufnummerneintrag zugeordnet sind, im zweiten Speicher 10 abgelegt wurde. Nach entsprechender Eingabe eines Ausgabebefehls mittels der Eingabeeinheit 25 kann der Benutzer eine Darstellung der Einträge der Anrufliste bzw. des zweiten Speichers 10 am Display 40 der Anzeigevorrichtung 30 veranlassen. Auf diese Weise können auch die im zweiten Speicher 10 gespeicherte Rufnummerninformation 20 und/oder ihr gegebenenfalls zugeordnete und ebenfalls im zweiten Speicher 10 gespeicherte Daten am Display 40 der Anzeigevorrichtung 30 dargestellt werden. Sollten der Rufnummerninformation 20 und/oder den Rufnummerneinträgen 11, ..., 16 Daten zugeordnet sein, so können diese Daten auch in dem weiteren, in Figur 1 nicht dargestellten Speicherbereich in Zuordnung zur Rufnummerninformation 20 bzw. dem jeweiligen Rufnummerneintrag 11, ..., 16 beispielsweise mittels geeigneter Adressierung abgelegt sein.

Der Benutzer des Telekommunikationsendgerätes 1 kann also auf diese Weise mittels der Anrufliste überprüfen, ob ein unerwünschter Anruf eingegangen ist, der zumindest nicht zur akustischen Signalisierung geführt hat und vom Benutzer nicht entgegengenommen wurde.

Im ersten Speicher 5 können eine oder mehrere, gemäß dem beschriebenen Ausführungsbeispiel bis zu sechs, Rufnummerneinträge 11, ..., 16 eingetragen sein, für die der Benutzer zumindest eine akustische Signalisierung unterdrücken möchte, sofern ein Ruf mit einer entsprechenden Rufnummerninformation 20 am Telekommunikationsendgerät 1 eingeht. Eine optische Signalisierung, sei es durch Anzeige am Display 40 oder durch die Leuchtdiode 45, sollte trotzdem bei allen Anrufen aktiv sein. Eine Unterdrückung der optischen Signalisierung kann dennoch zusätzlich vorgesehen sein. Eine Unterdrückung der optischen Signalisierung kann optional auch wahlweise über die Eingabeeinheit 25 von dem Benutzer gegebenenfalls für die Anzeige am Display 40 und die Leuchtdiode 45 getrennt ein- und ausschaltbar sein.

Im folgenden wird ein Beispiel für die Verwendung des erfindungsgemäßen Verfahrens beschrieben.

Schickt ein Fernsprechteilnehmer ein Telefax fälschlicherweise an einen Telefonanschluß in einem Besprechungszimmer, so kann das Telefaxgerät des Fernsprechteilnehmers die Nachricht nicht übermitteln und versucht, durch automatische Wahlwiederholung, beispielsweise im Abstand von 3 Minuten, den Telefonanschluß erneut zu erreichen. Ist an den Telefonanschluß das Telekommunikationsendgerät 1 angeschlossen, so kann über die Eingabeeinheit 25 beispielsweise durch Funktionstastenbetätigung die Rufnummer des Telefaxgerätes, die als Rufnummerninformation 20 an das Telekommunikationsendgerät 1 übertragen wurde, in Form eines Rufnummerneintrages auf einem Speicherplatz des ersten Speichers 5 eingetragen werden, wodurch eine Besprechung im Besprechungszimmer fortan ungestört fortgeführt werden kann. Der Telefonanschluß im Besprechungszimmer ist jedoch für alle anderen Anrufer weiterhin erreichbar.

Durch eine softwaremäßige Realisierung des erfindungsgemäßen Verfahrens mittels der Steuerung 35 fallen keine zusätzlichen Hardwarekosten an, wenn unterstellt wird, daß der für die Rufnummerneinträge 11, ..., 16 benötigte Speicherplatz und der für die Software erforderliche Speicherplatz ohne zusätzliche Speicherbausteine realisierbar ist.

In Figur 2 ist ein Ablaufplan für die Funktionsweise der Steuerung 35 dargestellt. Bei einem Programmpunkt 100 empfangt die Steuerung 35 eine Rufnummerninformation 20 aus dem Telekommunikationsnetz und detektiert dadurch einen eingehenden Ruf. Anschließend wird zu einem Programmpunkt 105 verzweigt. Bei Programmpunkt 105 vergleicht die Steuerung 35 die Rufnummerninformation 20 nacheinander mit den Rufnummerneinträgen 11, ..., 16 des ersten Speichers 5. Bei Übereinstimmung der Rufnummerninformation 20 mit einem der Rufnummerneintrage 11, ..., 16 wird zu einem Programmpunkt 115 verzweigt, andernfalls wird zu einem Programmpunkt 110 verzweigt. Bei Programmpunkt 115 veranlaßt die Steuerung 35 zumindest die Unterdrückung der akustischen Signalisierung des eingehenden Rufes und gegebenenfalls auch eine Unterdrückung der optischen Signalisierung des eingehenden Rufes mittels Leuchtdiode 45 und/oder Darstellung der Rufnummerninformation 20 und/oder ihr zugeordneter Daten am Display 40. Dabei wird wahlweise die Beleuchtung der Leuchtdiode 45, die Anzeige am Display 40 oder beides unterdrückt. Nach Programmpunkt 115 kann optional vor Verlassen des Programmteils noch zu einem Programmpunkt 120 verzweigt werden, bei dem die Steuerung 35 eine Speicherung der Rufnummerninformation 20 und/oder ihr zugeordneter Daten im zweiten Speicher 10 veranlaßt. Nach Programmpunkt 120 wird der Programmteil dann verlassen. Bei Programmpunkt 110 erfolgt zumindest eine akustische Signalisierung des eingehenden Rufes mittels des Lautsprechers 50 und gegebenenfalls auch eine optische Signalisierung des eingehenden Rufes mittels der Leuchtdiode 45 und/oder der Anzeige der Rufnummerninformation 20 und/oder ihr zugeordneter Daten am Display 40 der Anzeigevorrichtung 30. Nach Programmpunkt 110 wird der Programmteil ebenfalls verlassen.

Der erste Speicher 5 und/oder der zweite Speicher 10 und/oder der gegebenenfalls vorhandene weitere Speicherbereich kann auch außerhalb des Telekommunikationsendgerätes 1 in Zuordnung zu dem Telekommunikationsendgerät 1 angeordnet sein.

## Patentansprüche

1. Verfahren zur akustischen und/oder optischen Signalisierung eingehender Rufe bei einem Telekommunikationsendgerät (1), wobei eine Rufnummerninformation (20) eines rufenden Teilnehmers an das Telekommunikationsendgerät (1) übertragen wird, dadurch gekennzeichnet, daß die vom rufenden Teilnehmer empfangene Rufnummerninformation (20) mit mindestens einem Rufnummerneintrag (11,..., 16) verglichen wird, der in einem dem Telekommunikationsendgerät (1) zugeordneten Speicher (5) abgelegt ist, und daß bei Übereinstimmung der Rufnummerninformation (20) mit dem Rufnummerneintrag (11,..., 16) zumindest eine akustische Signalisierung des eingehenden Rufes unterdrückt wird.

2. Verfahren nach Anspruch 1, dadurch gekennzeichnet, daß bei Übereinstimmung der Rufnummerninformation (20) mit dem Rufnummerneintrag (11,..., 16) eine optische Signalisierung des eingehenden Rufes unterdrückt wird.

3. Verfahren nach Anspruch 1 oder 2, dadurch gekennzeichnet, daß mindestens ein an einer dem Telekommunikationsendgerät (1) zugeordneten Eingabeeinheit (25) eingegebener Rufnummerneintrag (11,..., 16) im Speicher (5) gespeichert wird.

4. Verfahren nach Anspruch 1, 2 oder 3, dadurch gekennzeichnet, daß die Rufnummerneinträge (11,..., 16) in dem Speicher (5) nach dem First-In-First-Out-Prinzip (FIFO) abgespeichert werden, so daß der am längsten im Speicher (5) befindliche Rufnummerneintrag (11,..., 16) als erstes überschrieben wird, wenn kein freier Speicherplatz mehr vorhanden ist.

5. Verfahren nach einem der vorherigen Ansprüche, dadurch gekennzeichnet, daß die Rufnummerninformation (20) und/oder ihr zugeordnete Daten eines eingehenden und zumindest akustisch nicht signalisierten Rufes in einem weiteren Speicher (10), insbesondere in einer Anrufliste, gespeichert wird.

6. Verfahren nach Anspruch 5, dadurch gekennzeichnet, daß mindestens eine im weiteren Speicher (10) abgelegte Rufnummerninformation (20) und/oder die ihr zugeordneten Daten nach entsprechender Eingabe eines Ausgabebefehls mittels der Eingabeeinheit (25) an einer Anzeigevorrichtung (30) des Telekommunikationsendgerätes (1) dargestellt wird.
